# EUROPÄISCHE PATENTSCHRIFT

(11) **EP 2 143 969 B1**
(45) Veröffentlichungstag und Bekanntmachung des Hinweises auf die Patenterteilung: **26.08.2015**
(21) Anmeldenummer: 09007967.4
(22) Anmeldetag: 18.06.2009
(51) Int. Cl.: F16F 9/32, F16F 9/34

(54) **Dämpfer**
Damper
Amortisseur

(30) Priorität: 09.07.2008 DE 102008032234
(43) Veröffentlichungstag der Anmeldung: 13.01.2010
(73) Patentinhaber: SUSPA GmbH, 90518 Altdorf (DE)
(72) Erfinder: Seifried, Christian, 91242 Ottensoos (DE); Krog, Andreas, 90610 Winkelhaid (DE)
(74) Vertreter: Rau, Albrecht

(56) Entgegenhaltungen:
- DE-B- 1 148 112
- GB-A- 750 522
- GB-A- 809 682
- GB-A- 2 220 725
- US-A- 3 302 756
- US-A- 3 360 086
- US-A- 3 581 850

## Beschreibung

Die Erfindung betrifft eine mit einem Fluid gefüllte Kolben-Zylinder-Einheit, insbesondere einen Hydraulikdämpfer oder eine Gasfeder.

Hydraulikdämpfer, welche zur Steuerung der Ausschubgeschwindigkeit einen Kolben mit Durchlass-Kanälen aufweisen, sind beispielsweise aus der DE 195 39 616 A1 bekannt. Bei der Bewegung der Kolben in derartigen Dämpfern können in den Durchström-Kanälen hohe Strömungsgeschwindigkeiten des Fluids auftreten, was beim Austritt des Fluids aus den Durchström-Kanälen zu unerwünschten Geräusche führen kann. Aus der US 3 360 086 A und der US 3 302 756 A sind Dämpfer bekannt.

Der Erfindung liegt daher die Aufgabe zugrunde, derartige Hydraulikdämpfer zu verbessern.

Diese Aufgabe wird durch die Merkmale des Anspruchs 1 gelöst. Der Kern der Erfindung besteht darin, im Bereich der Durchlass-Öffnung ein Dämpfungs-Element zur Umlenkung einer durch die Durchlass-Öffnung durchströmenden Fluid-Strömung anzuordnen. Das Dämpfungs-Element ist vorzugsweise aus einem offenporigen oder schaumartigen Material.

Das Dämpfungs-Element bewirkt eine Turbulenz des die Durchlass-Öffnung durchströmenden Fluids und somit eine durch Durchmischung desselben mit dem Fluid auf der Austritts-Seite der Durchlass-Öffnung. Hierdurch wird die Maximalgeschwindigkeit des durch die Durchlass-Öffnung durchströmenden Fluids stark reduziert. Weitere Vorteile der Erfindung ergeben sich aus den Unteransprüchen.

Merkmale und Einzelheiten der Erfindung ergeben sich aus der Beschreibung von Ausführungsbeispielen anhand der Zeichnung. Es zeigen:
- Fig. 1: eine schematische Darstellung einer Zylinder-Kolbenstangen-Einheit,
- Fig. 2: einen Querschnitt durch die Zylinder-Kolbenstangen-Einheit gemäß einem ersten Ausführungsbeispiel im Bereich des Kolbens,
- Fig. 3: einen Querschnitt durch die Zylinder-Kolbenstangen-Einheit gemäß einem nicht durch die Ansprüche abgedeckten Beispiel im Bereich des Kolbens,
- Fig. 4: einen Querschnitt durch die Zylinder-Kolbenstangen-Einheit gemäß einem nicht durch die Ansprüche abgedeckten Beispiel im Bereich des Kolbens,
- Fig. 5: einen Querschnitt durch die Zylinder-Kolbenstangen-Einheit gemäß einem zweiten Ausführungsbeispiel im Bereich des Kolbens und
- Fig. 6: einen Querschnitt durch die Zylinder-Kolbenstangen-Einheit gemäß einem nicht durch die Ansprüche abgedeckten Beispiel im Bereich des Kolbens.

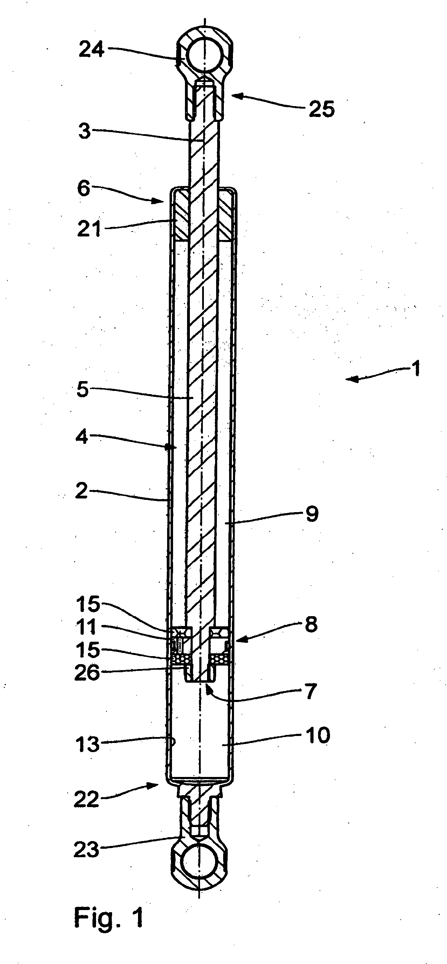

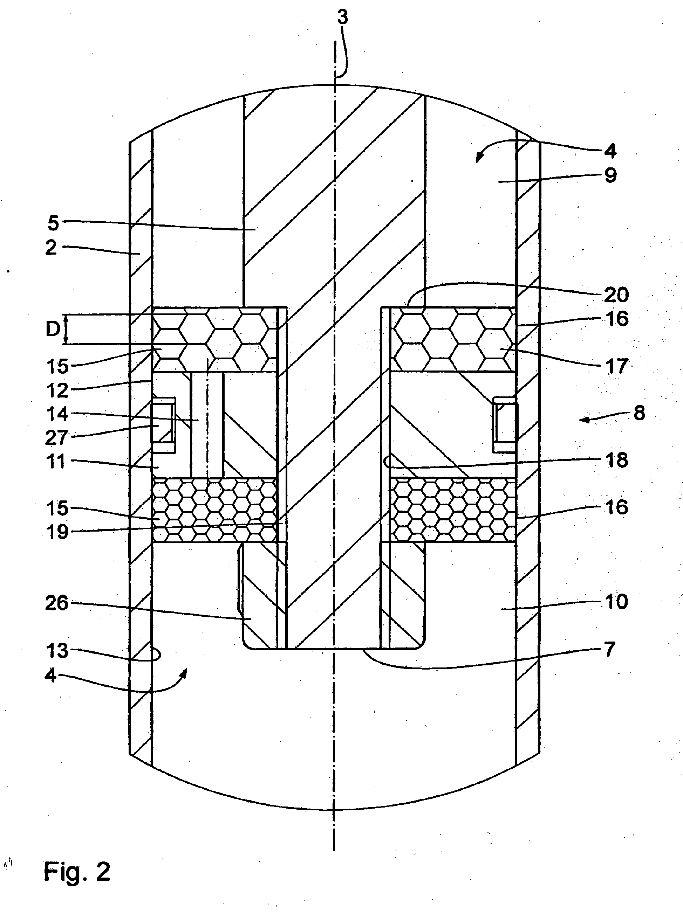

Im Folgenden wird unter Bezugnahme auf die Figuren 1 und 2 ein erstes Ausführungsbeispiel der Erfindung beschrieben. Eine als hydraulischer Dämpfer 1 ausgebildete Kolben-Zylinder-Einheit weist ein im Wesentlichen aus einem zylindrischen Rohr bestehendes Gehäuse 2 mit einer Mittel-Längs-Achse 3 und einem zumindest teilweise mit einem Fluid gefüllte Innenraum 4 auf. Als Fluid kommt beispielsweise ein Gas, insbesondere Stickstoff oder Luft, oder eine Flüssigkeit, insbesondere ein Hydrauliköl in Frage.

Im Gehäuse 2 ist eine Kolbenstange 5 koaxial zur Mittel-Längs-Achse 3 angeordnet. Die Kolbenstange 5 ist an einem Ende 6 des Gehäuses 2 aus diesem herausgeführt. Die Kolbenstange 5 ist insbesondere am Ende 6 des Gehäuses 2 in einer Führungs- und Dichtungseinheit 21 abgedichtet geführt. Für weitere Details sei auf die DE 195 39 616 A1 verwiesen. An einem dem Ende 6 mit der Führungs- und Dichtungseinheit 21 gegenüberliegenden Ende 22 des Gehäuses 2 ist ein erstes Befestigungselement 23 am Gehäuse 2 angebracht. Entsprechend ist ein zweites Befestigungselement 24 am aus dem Gehäuse 2 herausgeführten Ende 25 der Kolbenstange 5 angebracht.

Die Kolbenstange 5 weist ein im Innenraum 4 des Gehäuses 2 angeordnetes freies Ende 7 auf. An diesem ist ein Kolben 8 angebracht. Der Kolben 8 unterteilt den Innenraum 4 in einen ersten Teil-Innenraum 9 und einen zweiten Teil-Innenraum 10. Der Kolben 8 umfasst eine Kolben-Scheibe 11 mit einem äußeren Umfang 12, welcher zumindest bereichsweise, insbesondere über seine gesamte Länge an einer Innenwand 13 des Gehäuses 2 anliegt. Die Kolbenscheibe 11 ist mittels eines Kolben-Dichtrings 27 gegenüber der Innenwand 13 des Gehäuses 2 abgedichtet. Die Kolbenscheibe weist eine eine Durchlass-Öffnung bildende Bohrung 14 zur strömungsdurchlässigen Verbindung der Teil-Innenräume 9, 10 auf. Die Bohrung 14 ist insbesondere parallel zur Mittel-Längs-Achse 3 ausgerichtet.

Außerdem umfasst der Kolben 8 zwei als Ablenk-Scheiben 15 ausgebildete Dämpfungs-Elemente. Die Ablenk-Scheiben 15 sind in Richtung der Mittel-Längs-Achse 3 vor bzw. hinter der Bohrung 14 in der Kolbenscheibe 11 angeordnet. Sie sind parallel zur Kolbenscheibe 11 an der Kolbenstange 5 angebracht. Die Ablenk-Scheiben 15 dienen der Umlenkung einer durch die Bohrung 14 durchströmenden Fluid-Strömung. Die Ablenk-Scheiben 15 haben wie die Kolbenscheibe 11 einen äußeren Umfang 16, welcher zumindest bereichsweise, insbesondere über seine gesamte Länge an der Innenwand 13 des Gehäuses 2 anliegt. Die Ablenk-Scheiben 15 weisen eine wabenartige oder andere offenporige Struktur auf. Sie weisen eine Vielzahl offener Poren 17 mit einem mittleren Durchmesser D im Bereich von 10 nm bis 10 mm, insbesondere im Bereich von 10 µm bis 2 mm, insbesondere im Bereich von 100 µm bis 1 mm auf. Die Ablenk-Scheiben 15 sind beispielsweise aus einem Drahtgestrick, Sintermetall oder -keramik. Schaumstoff, insbesondere offenporiger Metall- oder Keramikschaumstoff ist ebenfalls möglich.

Über eine gezielte Auswahl der Porengröße ist auch das Dämpfungsverhalten des Dämpfers 1 beeinflussbar. Allgemein führen kleinere Poren zu einem höheren Strömungswiderstand und somit zu einer stärkeren Dämpfung. Die beiden Ablenk-Scheiben 15 haben insbesondere eine unterschiedliche Porengröße. Hierdurch lassen sich asymmetrische Dämpfungseigenschaften erreichen. Selbstverständlich ist es ebenfalls möglich, Ablenk-Scheiben 15 mit gleicher Porengröße vorzusehen.

Vorteilhafterweise sind die Ablenk-Scheiben 15 auf einfache Weise auswechselbar. Die Ablenk-Scheiben 15 und die Kolben-Scheibe 11 sind auf das freie Ende 7 der Kolbenstange 5 aufgesteckt und mittels eines Sicherungs-Elements, beispielsweise einer Mutter 26, insbesondere einer selbstsichernden Mutter, gegen eine Verschiebung relativ zur Kolbenstange 5 in Richtung parallel zur Mittel-Längs-Achse 3 abgesichert. Die eine der Ablenkscheiben 5 kommt hierbei an einer Schulter 20 der Kolbenstange 5 zum Anliegen. Die Ablenk-Scheiben 15 und/oder die Kolbenscheibe 11 können auch ein Innengewinde 18 aufweisen, mittels welchem sie auf ein dazu passendes Außengewinde 19 im Bereich des freien Endes 7 der Kolbenstange 5 aufgeschraubt sind.

Im Folgenden wird die Funktionsweise des Dämpfers 1 beschrieben. Bei einer Verschiebung des Kolbens 8 mit der Kolbenstange 5 in Richtung der Mittel-Längs-Achse 3 muss das im Innenraum 4 des Gehäuses 2 enthaltene Fluid durch die Bohrung 14 vom einen in den anderen Teil-Innenraum 9, 10 strömen. Je kleiner die Öffnung der Bohrung 14 in Richtung senkrecht zur Mittel-Längs-Achse 3 ist, umso größer ist der vom Kolben 8 einer Verschiebung desselben in Richtung der Mittel-Längs-Achse 3 entgegengesetzte Widerstand. In der Bohrung 14 erreicht das durchströmende Fluid hohe Strömungsgeschwindigkeiten. Ohne die Ablenk-Scheiben 15 würde es beim Austreten aus der Bohrung 14 einen sogenannten Jet bilden. Aufgrund der der Bohrung 14 zugeordneten Ablenk-Scheiben 15 wird das durch die Bohrung 14 durchströmende Fluid jedoch verwirbelt. Beim Durchströmen des Fluids durch die Poren 17 einer der Ablenk-Scheiben 15 kommt es zu Turbulenzen, insbesondere zu einer turbulenten Vermischung des Fluids. Hierdurch wird die Maximalgeschwindigkeit der Fluid-Strömung, insbesondere in Richtung parallel zur Mittel-Längs-Achse 3 stark reduziert.

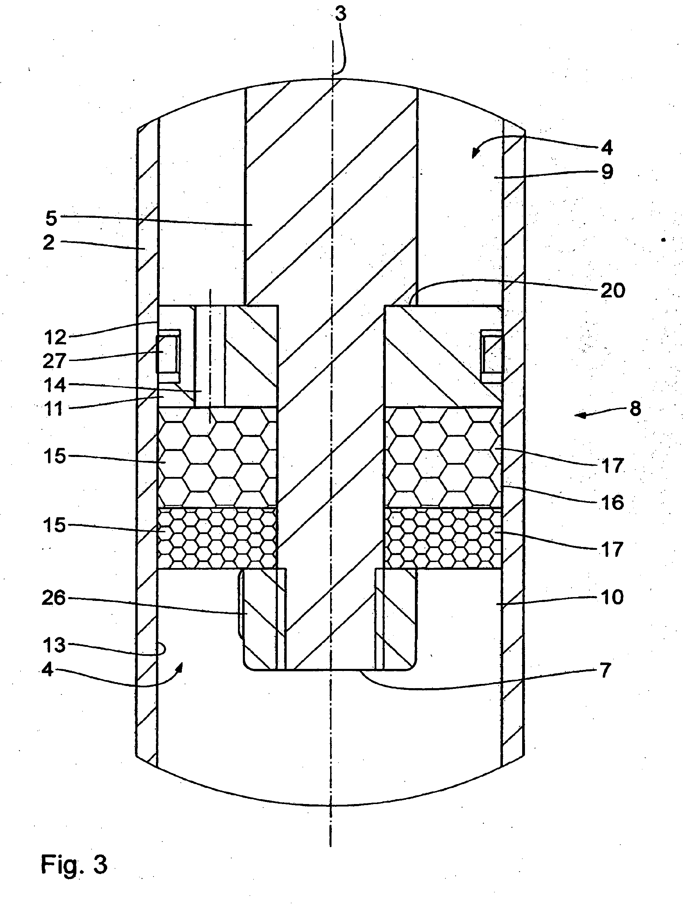

Im Folgenden wird unter Bezugnahme auf die Fig. 3 ein Beispiel beschrieben. Die Teile erhalten dieselben Bezugszeichen wie beim Ausführungsbeispiel gemäß Fig. 2, auf dessen Beschreibung hiermit verwiesen wird. Der Unterschied zum Ausführungsbeispiel gemäß Fig. 2 besteht darin, dass die beiden Ablenk-Scheiben 15 aneinander anliegend, das heißt in Reihe geschaltet, auf derselben Seite der Kolben-Scheibe 11 in Richtung der Mittel-Längs-Achse 3 angeordnet sind. Hierdurch wird eine stufenweise, zunehmende Verwirbelung des durch die Bohrung 14 strömenden Fluids erreicht.

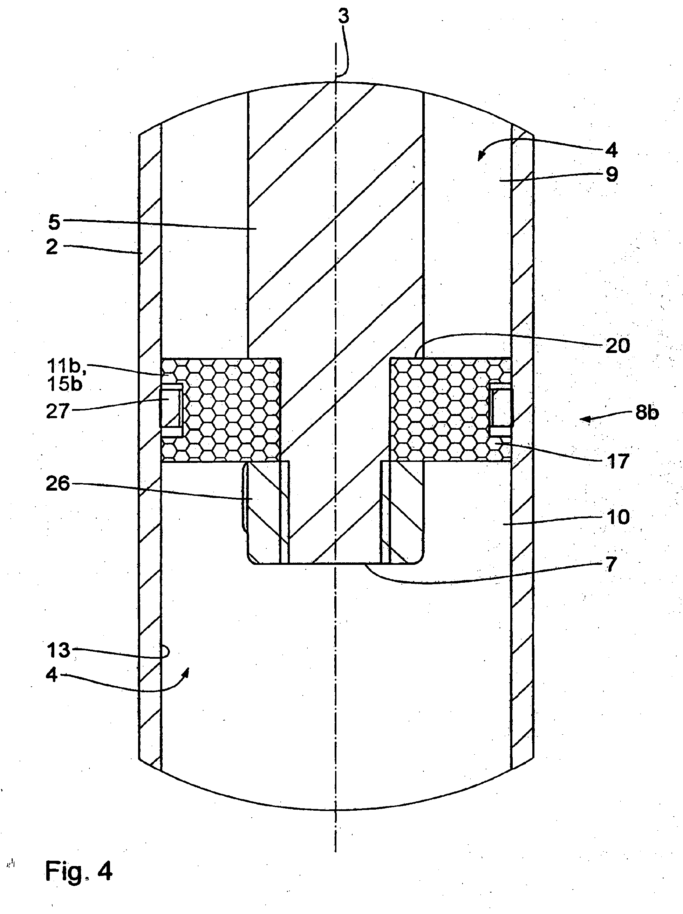

Im Folgenden wird unter Bezugnahme auf die Fig. 4 ein Beispiel beschrieben. Die Teile erhalten dieselben Bezugszeichen wie bei dem Ausführungsbeispiel gemäß Fig. 2. Konstruktiv unterschiedliche, jedoch funktionell gleichartige Teile erhalten dieselben Bezugszeichen mit einem nachgestellten "bp". Der wesentliche Unterschied zum Ausführungsbeispiel gemäß Fig. 2 besteht darin, dass die Kolbenscheibe 11b selbst als Ablenk-Scheibe 15b mit Poren 17 ausgebildet ist. Da die Poren 17 ihrerseits eine Durchlass-Öffnung bilden, kann auf eine separate Bohrung in der Kolben-Scheibe 11b verzichtet werden. Ebenso kann auf weitere, mit der Kolbenscheibe 11b in Reihe geschaltete Ablenk-Scheiben 15 verzichtet werden, da die als Ablenk-Scheibe 15b ausgebildete Kolben-Scheibe 11b selbst ein der Durchlass-Öffnung zugeordnetes Dämpfungs-Element bildet.

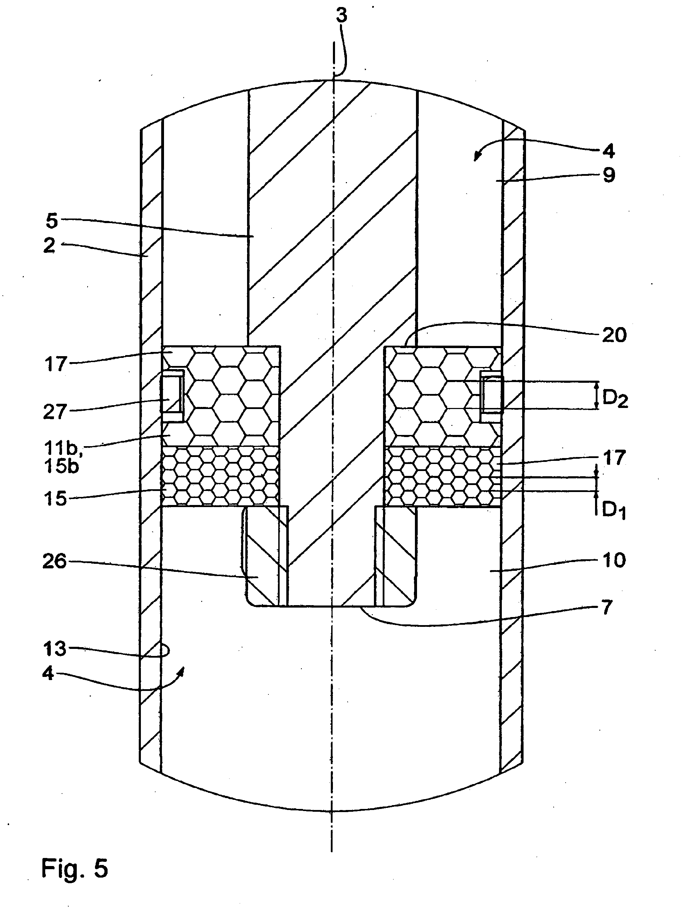

Im Folgenden wird unter Bezugnahme auf die Fig. 5 ein zweites Ausführungsbeispiel beschrieben. Identische Teile erhalten dieselben Bezugszeichen wie beim Ausführungsbeispiel gemäß Fig. 4, auf dessen Beschreibung hiermit verwiesen wird. Der Unterschied zum Ausführungsbeispiel gemäß Fig. 4 besteht darin, dass zusätzlich zu der als Ablenk-Scheibe 15b ausgebildeten Kolbenscheibe 11b eine weitere Ablenk-Scheibe 15 vorgesehen ist, welche mit der Kolbenscheibe 11b in Reihe geschaltet ist. Die zusätzliche Ablenk-Scheibe 15 weist insbesondere Poren 17 auf, welche einen kleineren mittleren Durchmesser D₁ haben als die Poren 17 der Kolben-Scheibe 11b mit einem Durchmesser D₂.

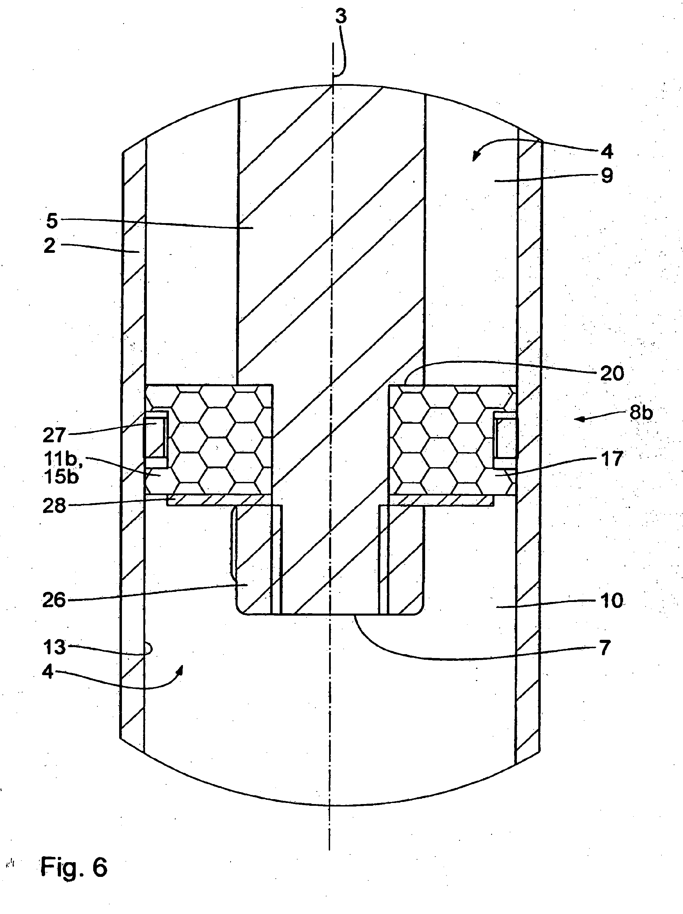

Im Folgenden wird unter Bezugnahme auf die Fig. 6 ein Beispiel der Erfindung beschrieben. Die Teile erhalten dieselben Bezugszeichen wie bei dem Ausführungsbeispiel gemäß Fig. 4, auf dessen Beschreibung hiermit verwiesen wird. Der Unterschied zum Ausführungsbeispiel gemäß Fig. 4 besteht darin, dass zusätzlich zu der Kolbenscheibe 11b eine Prall-Scheibe 28 vorgesehen ist, welche mit der Kolbenscheibe 11b in Reihe geschaltet ist. Die Prall-Scheibe 28 liegt an der Kolbenscheibe 11b an. Mittels der Prall-Scheibe 28 wird der Wirkungsquerschnitt des Kolbens 8b verkleinert, um so die Dämpfungs-Charakteristik zu beeinflussen. Die Prall-Scheibe 28 ist vorzugsweise flexibel ausgebildet. Sie kann auch als Ventil-Scheibe ausgebildet sein und eine Verschiebbarkeit der Kolbenstange 5 mit dem Kolben 8b in einer Richtung parallel zur Mittel-Längs-Achse 3 verhindern, jedoch eine Verschiebung der Kolbenstange 5 mit dem Kolben 8b in entgegengesetzter Richtung ermöglichen.

Prinzipiell ist es auch möglich, die Ablenk-Scheibe 15 zwischen zwei Kolben-Scheiben 11 anzuordnen. Dies ist insbesondere von Vorteil, falls die Ablenk-Scheibe 15 aus einem Material mit einer geringen strukturellen Stabilität ist.

Selbstverständlich sind die Merkmale der beschriebenen Ausführungsbeispiele frei miteinander kombinierbar.

## Patentansprüche

1. Mit Fluid gefüllte Kolben-Zylinder-Einheit
a. mit einem eine Mittel-Längs-Achse (3) aufweisende Gehäuse (2) mit
i. einem zumindest teilweise mit einem Fluid gefüllten Innenraum (4),
b. mit einer aus dem Gehäuse (2) herausgeführten, koaxial zur Mittel-Längs-Achse (3) angeordneten Kolbenstange (5) und
c. mit einem an der Kolbenstange (5) angebrachten Kolben (8; 8b),
i. welcher den Innenraum (4) in einen ersten und eine zweiten Teil-Innenraum (9, 10) unterteilt und
ii. mindestens eine Durchlass-Öffnung (14) zur strömungsdurchlässigen Verbindung der Teil-Innenräume (9, 10) aufweist,
d. wobei der mindestens einen Durchlass-Öffnung (14) mindestens ein Dämpfungs-Element zur Umlenkung einer durch die Durchlass-Öffnung (14) durchströmenden Fluid-Strömung zugeordnet ist
e. **gekennzeichnet durch** mindestens zwei Dämpfungs-Elemente,
f. wobei die Dämpfungs-Elemente eine offenporige Struktur aufweisen, und
g. wobei die Dämpfungs-Elemente auf einander in Richtung der Mittel-Längs-Achse (3) gegenüberliegenden Seiten des Kolbens (8; 8b) angeordnet sind.

2. Kolben-Zylinder-Einheit gemäß Anspruch 1, **dadurch gekennzeichnet, dass** mindestens ein Dämpfungs-Element als an der Kolbenstange (5) angebrachte Ablenk-Scheibe (15; 15b) ausgebildet ist.

3. Kolben-Zylinder-Einheit gemäß einem der vorhergehenden Ansprüche, **dadurch gekennzeichnet, dass** mindestens ein Dämpfungs-Element in Richtung der Mittel-Längs-Achse (3) vor oder hinter der Durchlass-Öffnung (14) angeordnet ist.

4. Kolben-Zylinder-Einheit gemäß einem der vorhergehenden Ansprüche, **dadurch gekennzeichnet, dass** die Dämpfungs-Elemente eine Vielzahl offener Poren (17) mit einem mittleren Durchmesser D im Bereich von 10 nm bis 10 mm, insbesondere im Bereich von 10 µm bis 2 mm, insbesondere im Bereich von 100 µm bis 1 mm aufweisen.

5. Kolben-Zylinder-Einheit gemäß einem der vorhergehenden Ansprüche, **dadurch gekennzeichnet, dass** mindestens zwei der Dämpfungs-Elemente Poren (17) unterschiedlicher Größe aufweisen.

6. Kolben-Zylinder-Einheit gemäß einem der vorhergehenden Ansprüche, **dadurch gekennzeichnet, dass** der Kolben (8b) einteilig mit mindestens einem der Dämpfungs-Elemente ausgebildet ist.

7. Kolben-Zylinder-Einheit gemäß einem der vorhergehenden Ansprüche, **dadurch gekennzeichnet, dass** der Kolben (8; 8b) außerdem mindestens eine Prall-Scheibe (28) aufweist.

## Claims

1. Piston cylinder unit filled with fluid comprising
a. a housing (2) with a central longitudinal axis (3) with
i. an inner chamber (4) filled at least partly with a fluid,
b. a piston rod (5) guided out of the housing (2), arranged coaxially to the central longitudinal axis (3) and
c. a piston (8; 8b) attached to the piston rod (5),
i. which divides the inner chamber (4) into a first and a second part inner chamber (9, 10) and
ii. comprises at least one outlet opening (14) for connecting the part inner chambers (9, 10) in a flow-enabling manner,
d. wherein the at least one outlet opening (14) is assigned at least one damping element for deflecting a fluid flowing through the outlet opening (14),
e. **characterised by** at least two damping elements,
f. wherein the damping elements have an open-pored structure, and
g. wherein the damping elements are arranged on opposite sides of the piston (8; 8b) in the direction of the central longitudinal axis (3).

2. Piston cylinder unit according to claim 1, **characterised in that** at least one damping element is configured as a deflecting disc (15; 15b) attached to the piston rod (5).

3. Piston cylinder unit according to any one of the preceding claims, **characterised in that** at least one damping element is arranged in the direction of the central longitudinal axis (3) in front of or behind the outlet opening (14).

4. Piston cylinder unit according to any one of the preceding claims, **characterised in that** the damping elements comprise a plurality of open pores (17) with an average diameter D in the range of 10 nm to 10 mm, in particular in the range of 10 µm to 2 mm, in particular in the range of 100 µm to 1 mm.

5. Piston cylinder unit according to any one of the preceding claims, **characterised in that** at least two of the damping elements have pores (17) of varying size.

6. Piston cylinder unit according to any one of the preceding claims, **characterised in that** the piston (8b) is configured in one piece with at least one of the damping elements.

7. Piston cylinder unit according to any one of the preceding claims, **characterised in that** the piston (8; 8b) also comprises at least one baffle disc (28).

## Revendications

1. Unité piston-cylindre remplie de fluide
a. avec un boîtier (2) présentant un axe longitudinal central (3)
avec
i. une chambre intérieure (4) remplie au moins partiellement avec un fluide,
b. avec une tige de piston (5), sortant du boîtier (2), disposée de manière coaxiale par rapport à l'axe longitudinal central (3), et
c. avec un piston (8 ; 8b) rapporté sur la tige de piston (5),
i. lequel divise la chambre intérieure (4) en une première chambre partielle intérieure et une deuxième chambre partielle intérieure (9, 10) et
ii. présente au moins une ouverture de passage (14) pour un raccordement d'écoulement perméable des chambres partielles intérieures (9, 10),
d. dans laquelle au moins un élément d'amortissement est associé à l'au moins une ouverture de passage (14) pour la dérivation d'un écoulement de fluide passant à travers l'ouverture de passage (14),
e. **caractérisée par** au moins deux éléments d'amortissement,
f. où les éléments d'amortissement présentent une structure à pores ouverts, et
g. où les éléments d'amortissement sont disposés sur les côtés du piston (8 ; 8b) se faisant face dans la direction de l'axe longitudinal central (3).

2. Unité piston-cylindre selon la revendication 1, **caractérisée en ce qu'**au moins un élément d'amortissement est conçu sous la forme d'un disque de déviation (15 ; 15b) rapporté sur la tige de piston (5).

3. Unité cylindre-piston selon l'une des revendications précédentes, **caractérisée en ce qu'**au moins un élément d'amortissement est disposé avant ou après l'ouverture de passage (14) dans la direction de l'axe longitudinal central (3).

4. Unité piston-cylindre selon l'une des revendications précédentes, **caractérisée en ce que** les éléments d'amortissement présentent une multiplicité de pores (17) ouverts avec un diamètre moyen D dans l'intervalle de 10 nm à 10 mm, notamment dans l'intervalle de 10 µm à 2 mm, en particulier, dans l'intervalle de 100 µm à 1 mm.

5. Unité piston-cylindre selon l'une des revendications précédentes, **caractérisée en ce qu'**au moins deux des éléments d'amortissement présentent des pores (17) de tailles différentes.

6. Unité piston-cylindre selon l'une des revendications précédentes, **caractérisée en ce que** le piston (8b) forme une seule pièce avec au moins l'un des éléments d'amortissement.

7. Unité piston-cylindre selon l'une des revendications précédentes, **caractérisé en ce que** le piston (8 ; 8b) présente en outre au moins une plaque de butée (28).
